# EUROPEAN PATENT SPECIFICATION

(11) **EP 4 005 892 B1**
(45) Date of publication and mention of the grant of the patent: **17.01.2024**
(21) Application number: 20847609.3
(22) Date of filing: 22.07.2020
(51) Int. Cl.: B60W 50/023, G06F 11/18, B60R 16/02

(54) **VEHICLE CONTROL SYSTEM**
FAHRZEUGSTEUERUNGSSYSTEM
SYSTÈME DE COMMANDE DE VÉHICULE

(30) Priority: 30.07.2019 JP 2019140231
(43) Date of publication of application: 01.06.2022
(73) Proprietor: MAZDA MOTOR CORPORATION, Hiroshima 730-8670 (JP)
(72) Inventor: KUROKAWA, Yoshimasa, Aki-gun, Hiroshima 730-8670 (JP); YAMASHITA, Tetsuhiro, Aki-gun, Hiroshima 730-8670 (JP)
(74) Representative: Frick, Robert
(86) International application number: PCT/JP2020/028504
(87) International publication number: WO 2021/020294

(56) References cited:
- EP-A2- 0 366 017
- WO-A1-2016/162624
- WO-A1-2019/001796
- JP-A- S5 014 987
- JP-A- H07 114 520
- JP-A- 2017 196 965
- US-A1- 2019 193 747

## Description

### TECHNICAL FIELD

The invention disclosed here relates to a vehicle control system.

### BACKGROUND ART

Japanese Patent Application Publication No. 2016-196295describes a vehicle control system. This vehicle control system includes a sensor, a command controller for computing a manipulated variable command based on a signal from the sensor, and an actuator driving controller for controlling an actuator based on the manipulated variable command from the command controller. At least two of the sensors, the command controller, and the actuator driving controller include failure detectors for detecting failures thereof.

WO 2019/001796 A1 discloses a vehicle control system configured to control an actuator in a vehicle, the vehicle control system comprising: three or more computation units; a determination unit; and an output unit, wherein each of the three or more computation units supplies a first control signal showing a target output of the actuator to the output unit.

### SUMMARY OF THE INVENTION

### TECHNICAL PROBLEM

The vehicle control system as described in Japanese Patent Application Publication No. 2016-196295 may have a fail operational function by including a plurality of control systems in the command controller. With these control systems in the command controller, even when a failure occurs in one of the control systems, the other control systems can continue control of the actuator.

However, since the plurality of control systems have a variation in reliability, merely selecting one of the control systems has difficulty in maintaining high reliability in controlling the actuators. Thus, it is difficult to enhance reliability of the fail operational function.

It is therefore an object of the invention disclosed here to enhance reliability of the fail operational function.

### SOLUTION TO THE PROBLEM

The invention disclosed here relates to a vehicle control system configured to control an actuator in a vehicle. The vehicle control system includes three or more computation units, a determination unit, and an output unit. Each of the three or more computation units supplies a first control signal showing a target output of the actuator to the output unit. The determination unit assigns the target output shown by the first control signal supplied from each of the three or more computation units with a number of votes based on a degree of reliability of the first control signal, and performs a majority ... vote of the target output based on the number of votes assigned to the target output, the number of votes assigned to the target output shown by the first control signal supplied from each of the three or more computation units increases as the degree of reliability of the first control signal increases. The output unit outputs a second control signal for controlling the actuator based on a target output regarded as a majority in the majority vote of the target output by the determination unit among the target outputs shown by the first control signals supplied from the three or more computation units.

In this configuration, the second control signal can be output in consideration of the degrees of reliability of the plurality of first control signals. Accordingly, high reliability in controlling the actuator can be maintained. Thus, reliability of the fail operational function can be enhanced.

In the vehicle control system, the number of votes is based on the degree of reliability of each of the plurality of first control signals may vary depending on a scene of the vehicle.

In this configuration, the second control signal can be output in consideration of the degree of reliability of each of the plurality of first control signals that varies depending on the scene of the vehicle. Accordingly, high reliability in controlling the actuator can be maintained. Thus, reliability of the fail operational function can be enhanced.

In the vehicle control system, the output unit may be configured to generate the second control signal by synthesizing the first control signals supplied from the three or more computation units based on a result of the majority vote of the target output by the determination unit and the number of votes based on the degrees of reliability of the plurality of first control signals.

In this configuration, the second control signal can be generated in consideration of the degrees of reliability of the plurality of first control signals. Accordingly, high reliability in controlling the actuator can be maintained. Thus, reliability of the fail operational function can be enhanced.

The vehicle control system may include a first controller; and a second controller disposed on a signal path between the first controller and the actuator. One or more of the three or more computation units may be disposed in the first controller, and another one or more of the three or more computation units may be disposed in the second controller.

In this configuration, even when supply of the first control signals from the computation units of the first controller stops because of an error in the first controller, control of the actuator can be continued by using the first control signals supplied from the computation units in the second controller. As a result, reliability of the fail operational function can be enhanced.

The vehicle control system may include a first controller; and a second controller disposed on a signal path between the first controller and the actuator. The three or more computation units may be disposed in the first controller. The determination unit and the output unit may be disposed in the second controller.

In this configuration, the plurality of computation units are disposed in the first controller, and the determination unit and the output unit are disposed in the second controller. Accordingly, a plurality of first control signals can be supplied from the first controller to the second controller. Accordingly, survivability to a communication error (e.g., blackout) between the first controller and the second controller can be enhanced, as compared to a case where one first control signal is supplied from the first controller to the second controller. That is, a failure in continuing control of the actuator caused by a communication error between the first controller and the second controller is less likely to occur. As a result, continuity of the fail operational function can be enhanced.

### ADVANTAGES OF THE INVENTION

The invention disclosed here can enhance reliability of the fail operational function.

### BRIEF DESCRIPTION OF THE DRAWINGS

[FIG. 1] FIG. 1 is a block diagram illustrating an example configuration of a vehicle control system according to an embodiment.
[FIG. 2] FIG. 2 is a schematic view illustrating an example signal path in the vehicle control system.
[FIG. 3] FIG. 3 is a block diagram illustrating an example main portion of the vehicle control system.
[FIG. 4] FIG. 4 is a block diagram showing an example configuration of a main portion of a vehicle control system according to a third variation of the embodiment.
[FIG. 5] FIG. 5 is a block diagram showing another example configuration of a main portion of a vehicle control system according to the third variation of the embodiment.
[FIG. 6] FIG. 6 is a block diagram illustrating an example main portion of a vehicle control system according to a fourth variation of the embodiment.
[FIG. 7] FIG. 7 is a view illustrating an example specific configuration of a controller.

### DESCRIPTION OF EMBODIMENTS

An embodiment will be specifically described hereinafter with reference to the drawings. In the drawings, the same or corresponding parts are denoted by the same reference characters, and description thereof will not be repeated.

### (EMBODIMENT)

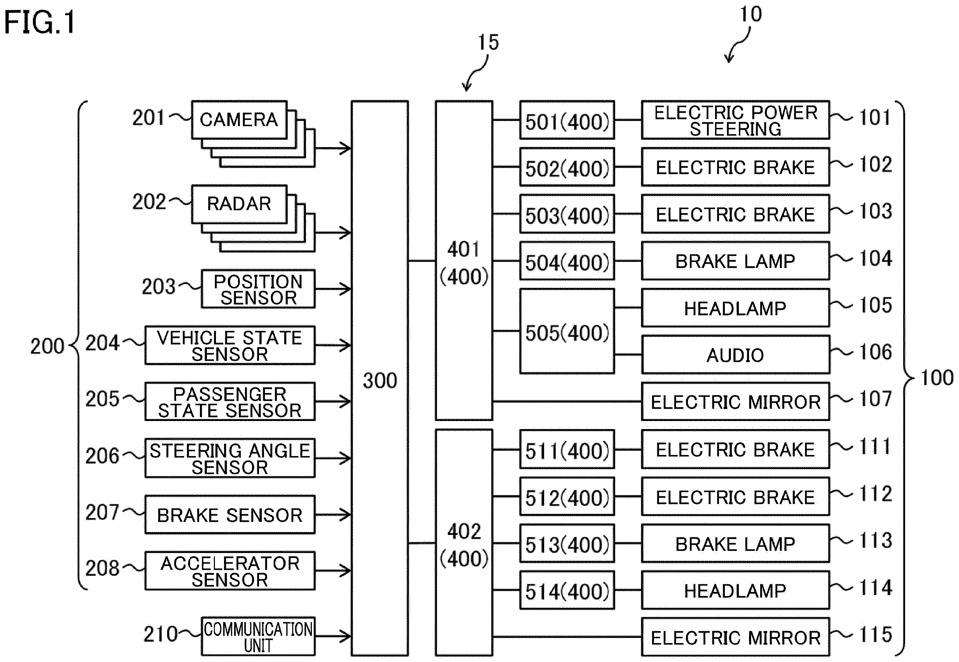

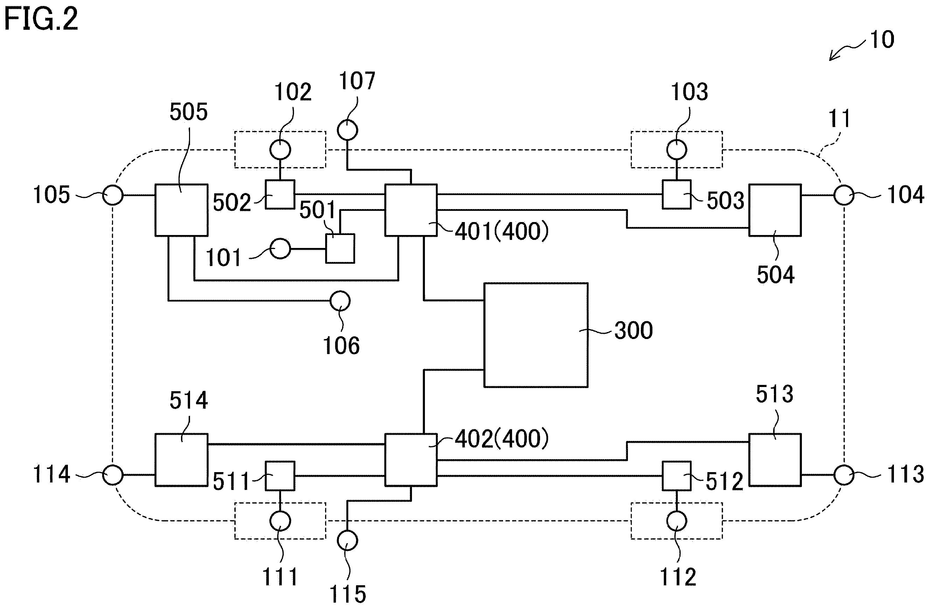

FIGS. 1 and 2 illustrate an example configuration of a vehicle control system 10. The vehicle control system 10 is installed in a vehicle 11 (specifically an automatic fourwheeled vehicle). The vehicle 11 is switchable among manual driving, assisted driving, and autonomous driving. The manual driving refers to driving in which the vehicle travels by driver's operation (e.g., operation of an accelerator). The assisted driving refers to driving in which the vehicle travels with assistance of driver's operation. The autonomous driving refers to driving in which the vehicle travels without driver's operation. The vehicle control system 10 controls operation of the vehicle 11 by controlling a plurality of actuators 100 in the vehicle 11 in the autonomous driving or the assisted driving.

In the vehicle 11, in driving control, braking control, and steering control, an X-by-wire technology for electrical control is employed. Specifically, an operation of an accelerator pedal, an operation of a brake pedal, and an operation of a steering wheel are detected by sensors described later, and the actuators 100 (i.e., actuators 100 concerning driving control, braking control, and steering control) are controlled in response to control signals generated based on outputs of the sensors so that driving control, braking control, and steering control are performed.

### [Actuator]

The actuators 100 individually actuate a plurality of vehicle-mounted devices (not shown) mounted on the vehicle 11. The actuators 100 include not only actuators 100 for actuating vehicle-mounted devices concerning basic operations of the vehicle 11 (e.g., driving, braking, and steering) but also actuators 100 for actuating vehicle-mounted devices not concerning basic operations of the vehicle 11 (so-called body-related devices). Examples of the vehicle-mounted devices include an engine, a transmission, an electric brake, an electric power steering, a brake lamp, a headlamp, an electric mirror, and an audio system. In the example illustrated in FIGS. 1 and 2, examples of the actuators 100 are an actuator 101 for an electric power steering device, actuators 102, 103, 111, and 112 for electric brakes, actuators 104 and 113 for brake lamps, actuators 105 and 114 for headlamps, and actuators 107 and 115 for electric mirrors.

### [Configuration of Vehicle Control System]

The vehicle control system 10 includes a plurality of sensors 200, a communication unit 210, and a computation device 15.

### [Sensors]

Each of the sensors 200 detects information for use in control of the actuators 100. In the example of FIG. 1, examples of the sensors 200 are a plurality of cameras 201, a plurality of radars 202, a position sensor 203, a vehicle state sensor 204, a passenger state sensor 205, a steering angle sensor 206, a brake sensor 207, and an accelerator sensor 208.

### <Camera (Imaging Section)>

The cameras 201 have similar configurations. The cameras 201 capture images of an external environment of the vehicle 11 to thereby acquire image data on the external environment of the vehicle 11. Image data acquired by the cameras 201 is transmitted to the computation device 15 (specifically a central controller 300, the same hereinafter). The cameras 201 are an example of an imaging section for taking images of an external environment of the vehicle 11.

In this example, the cameras 201 are monocular cameras having wide-angle lenses. The plurality of cameras 201 are disposed in the vehicle 11 such that an imaging area of the external environment of the vehicle 11 to be taken by the cameras 201 covers the entire surrounding of the vehicle 11. For example, the cameras 201 are constituted by solid-state image sensors such as charge coupled devices (CCD) or complementary metal-oxide-semiconductors (CMOS). The cameras 201 may be monocular cameras including normal lenses or stereo cameras.

### <Radar (Detector)>

The radars 202 have similar configurations. The radars 202 detect an external environment of the vehicle 11. Specifically, the radars 202 transmits electric waves toward the external environment of the vehicle 11 and receive reflected waves from the eternal environment of the vehicle 11 to thereby detect the external environment of the vehicle 11. Detection results of radars 202 are transmitted to the computation device 15. The radars 202 are an example of a detector for detecting the external environment of the vehicle 11. The detector transmits detection waves toward the external environment of the vehicle 11 and receives reflected waves from the external environment of the vehicle 11 to thereby detect the external environment of the vehicle 11.

In this example, the plurality of radars 202 are arranged on the vehicle 11 such that a detection area of the external environment of the vehicle 11 to be taken by the radars 202 covers the entire surrounding of the vehicle 11. For example, the radars 202 may be millimeter-wave radars for transmitting millimeter waves, lidars (light detection and ranging) for transmitting and receiving laser light, infrared ray radars for transmitting and receiving infrared rays, or ultrasonic wave sensors for transmitting and receiving ultrasonic waves.

### <Position Sensor>

The position sensor 203 detects a position (e.g., latitude and longitude) of the vehicle 11. For example, the position sensor 203 receives GPS information from a global positioning system and detects the position of the vehicle 11 based on the GPS information. The position of the vehicle 11 detected by the position sensor 203 is transmitted to the computation device 15.

### <Vehicle State Sensor>

The vehicle state sensor 204 detects a state (e.g., speed, acceleration, and yaw rate) of the vehicle 11. For example, the vehicle state sensor 204 includes a vehicle speed sensor for detecting a speed of the vehicle 11, an acceleration sensor for detecting an acceleration of the vehicle 11, and a yaw rate sensor for detecting a yaw rate of the vehicle 11. The state of the vehicle 11 detected by the vehicle state sensor 204 is transmitted to the computation device 15.

### <Passenger State Sensor>

The passenger state sensor 205 detects a state of a passenger (e.g., physical condition, emotion, and physical behavior of a driver) on the vehicle 11. For example, the passenger state sensor 205 includes an in-vehicle camera for taking an image of the passenger and a biometric sensor for detecting biometric information of the passenger. The state of the passenger detected by the passenger state sensor 205 is transmitted to the computation device 15.

### <Driving Operation Sensor>

The steering angle sensor 206, the brake sensor 207, and the accelerator sensor 208 are examples of a driving operation sensor for detecting a driving operation to the vehicle 11. The steering angle sensor 206 detects a steering angle of a steering wheel of the vehicle 11. The brake sensor 207 detects a manipulated variable of a brake of the vehicle 11. The accelerator sensor 208 detects a manipulated variable of an accelerator of the vehicle 11. The driving operation detected by the driving operation sensor is transmitted to the computation device 15.

### [Communication Unit]

The communication unit 210 communicates with an external device disposed outside the vehicle 11. For example, the communication unit 210 receives, for example, communication information from other vehicles (not shown) located around the vehicle 11 and traffic information from a navigation system (not shown). The information received by the communication unit 210 is transmitted to the computation device 15.

### [Computation Device]

The computation device 15 controls operation of the actuators 100 based on, for example, outputs of the sensors 200 on the vehicle 11 and information from outside the vehicle. For example, the computation device 15 determines a target path that is a path on which the vehicle 11 is to travel, determines a target motion that is a motion of the vehicle 11 necessary for traveling on the target route, and controls operation of the actuators 100 such that motion of the vehicle 11 is the target motion.

Specifically, the computation device 15 includes the central controller 300, and a plurality of zone controllers 400. In this example, the computation device 15 includes one central controller 300, two zone controllers 401 and 402, and nine zone controllers 501 through 505 and 511 through 514. Each of the central controller 300 and the zone controllers 400 is constituted by an electronic control unit (ECU) including, for example, one or more processors, and one or more memories for storing programs and data for operating the one or more processors.

### <Connection between Central Controller and Zone Controlled>

In the example of FIGS. 1 and 2, the two zone controllers 401 and 402 are connected to the central controller 300. As illustrated in FIG. 2, the zone controller 401 is disposed in a center portion of the right side of the vehicle 11, and the zone controller 402 is disposed in a center portion of the left side of the vehicle 11. Five zone controllers 501 through 505 and the actuator 107 of the electric mirror are connected to the zone controller 401. The five actuators 101 through 105 are respectively connected to the five zone controllers 501 through 505. Four zone controllers 511 through 514 and the actuator 115 of the electric mirror are connected to the zone controller 402. The four actuators 111 through 114 are respectively connected to the four zone controllers 511 through 514.

In the example of FIGS. 1 and 2, signal lines connecting the central controller 300 to the zone controllers 400 and a signal line connecting two zone controllers 400 are communication cables of Ethernet (registered trademark), and signal lines connecting the central controller 300 to the actuators 100 and signal lines connecting the zone controllers 400 to the actuators 100 are communication cables of controller area network (CAN). Each of the zone controllers 501 through 505 and 511 through 514 has the function of performing protocol conversion between Ethernet (registered trademark) and CAN.

### <Central Controller (First Controller)>

The central controller 300 receives outputs of the sensors 200 on the vehicle 11 and information from the outside of the vehicle and generates a plurality of control signals for controlling the actuators 100. The central controller 300 outputs a plurality of control signals. The central controller 300 is an example of a first controller.

For example, in assisted driving, the central controller 300 recognizes an external environment of the vehicle 11 based on outputs of the cameras 201 and the radars 202, and generates one or more candidate routes based on the recognized external environment of the vehicle 11. The candidate routes are routes on which the vehicle 11 is allowed to travel, and candidates of a target route.

The central controller 300 recognizes a behavior (e.g., speed, acceleration, and yaw rate) of the vehicle 11 based on an output of the vehicle state sensor 204. For example, the central controller 300 recognizes a behavior of the vehicle 11 from the output of the vehicle state sensor 204 using a leaning model generated by deep learning.

The central controller 300 recognizes a behavior of a passenger (e.g., physical condition, emotion, and physical behavior of a driver) based on an output of the passenger state sensor 205. For example, the central controller 300 recognizes a behavior of a passenger (especially a driver) from an output of the passenger state sensor 205 using a leaning model generated by deep learning.

The central controller 300 recognizes a driving operation applied to the vehicle 11 based on outputs of the steering angle sensor 206, the brake sensor 207, and the accelerator sensor 208.

Next, the central controller 300 selects a candidate route to be a target route from the one or more candidate routes generated as described above, based on the recognized behavior of the vehicle 11 and the driving operation applied to the vehicle 11. For example, the central controller 300 selects a candidate route for which the driver feels most comfortable from the plurality of candidate routes. Then, the central controller 300 determines a target motion based on the candidate route selected as the target route.

Thereafter, based on the target motion determined as described above, the central controller 300 generates a control signal for achieving the target motion. For example, the central controller 300 derives a target driving force, a target braking force, and a target steering amount that are a driving force, a braking force, and a steering amount for achieving a target motion. The central controller 300 generates a driving control signal showing a target driving force, a braking control signal showing a target braking force, and a steering control signal showing a target steering amount. The central controller 300 outputs a control signal.

### <Zone Controller (Second Controller)>

Each of the plurality of zone controllers 400 is provided in a predetermined zone of the vehicle 11. Each of the zone controllers 400 is disposed on a signal path between the central controller 300 and a corresponding one of the actuators 100. Specifically, one or more zone controllers 400 are provided on signal paths between the central controller 300 and one of the actuators 100. For example, in the example of FIGS. 1 and 2, two zone controllers 401 and 501 are provided on a signal path between the central controller 300 and the actuator 101 of the electric power steering. Each of the zone controllers 400 relays a signal. With this configuration, a control signal output from the central controller 300 is supplied to the actuator 100 by way of one or more zone controllers 400 so that operation of the actuator 100 is controlled.

For example, the zone controllers 400 (not shown) disposed on signal paths between the central controller 300 and actuators (not shown) of the engine and the transmission relay control signals output from the central controller 300 to the actuators of the engine and the transmission. The actuators of the engine and the transmission actuate the engine and the transmission based on a target driving force shown by a driving control signal. Accordingly, a driving force of the vehicle 11 is controlled to be a target driving force.

The zone controllers 401 and 502 disposed on a signal path between the central controller 300 and the actuator 102 of the electric brake relay a braking control signal output from the central controller 300 to the actuator 102. The actuator 102 actuates the electric brake based on a target braking force shown by the braking control signal. Accordingly, the braking force of the electric brake is controlled to be a target braking force.

The zone controllers 401 and 501 disposed on a signal path between the central controller 300 and the actuator 101 of the electric power steering relay a steering control signal output from the central controller 300 to the actuator 101. The actuator 101 actuates an electric power steering based on a target steering amount shown by the steering control signal. Accordingly, the steering amount of the vehicle 11 is controlled to be a target steering amount.

### [Details of Central Controller and Zone Controller]

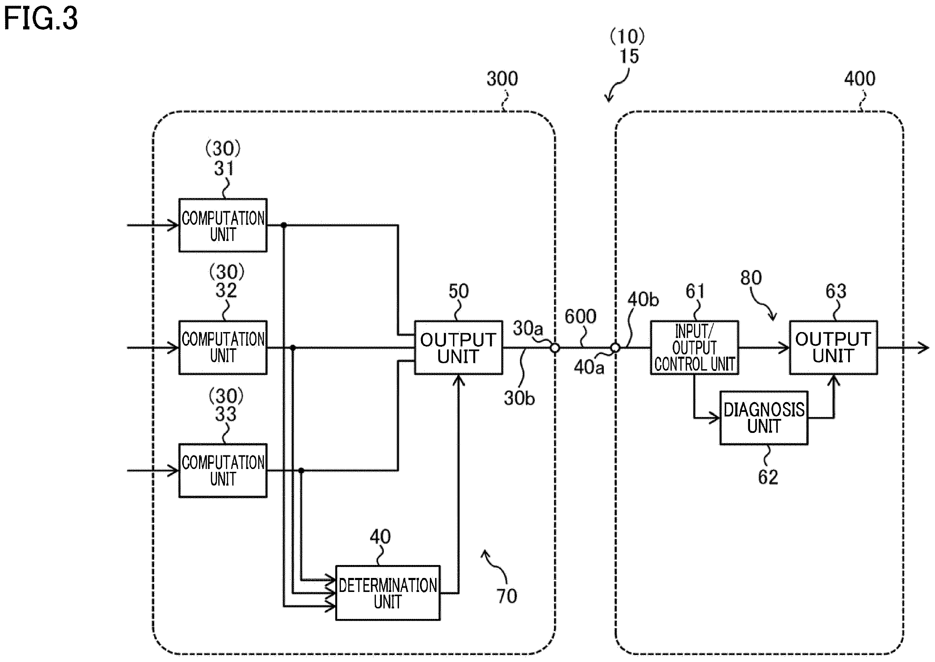

With reference to FIG. 3, the central controller 300 and the zone controllers 400 will now be described in detail. The following description is directed to a combination of the central controller 300 and one of the zone controllers 400.

### <Signal Line>

As illustrated in FIG. 3, the vehicle control system 10 includes at least one (one in this example) signal line 600 connecting the central controller 300 (first controller) to the zone controller 400 (second controller). In this example, the signal line 600 is a communication cable of Ethernet (registered trademark).

### <Central Controller (First Controller)>

The central controller 300 includes three or more computation units 30, a determination unit 40, and an output unit 50. In this example, the central controller 300 includes three computation units 30 (specifically a first computation unit 31, a second computation unit 32, and a third computation unit 33).

### <<Computation Unit>>

Each of the computation units 30 supplies a first control signal to the output unit 50. Accordingly, a plurality of first control signals are supplied from the computation units 30 to the output unit 50. Specifically, the computation units 30 obtain target outputs of the actuators 100 based on, for example, information detected by the sensors 200, and output first control signals showing the obtained target outputs of the actuators 100.

The first control signals are signals for controlling the actuators 100. Specifically, each of the first control signals shows a target output (e.g., target controlled variable) of a corresponding one of the actuators 100. Specific examples of the target outputs include a target driving force, a target braking force, and a target steering amount.

The target outputs shown by the first control signals are of the same type, but are different from one another in at least one of information used for deriving the target outputs (e.g., information detected by the sensors 200) and content of the deriving process of the target outputs (e.g., mathematical expression).

For example, one of the three first control signals shows a target steering amount derived based on a steering angle of the steering wheel of the vehicle 11 detected by the steering angle sensor 206. Another first control signal shows a target steering amount derived based on a rotation angle of an electric motor (not shown) of the electric power steering detected by a resolver (not shown) and a first operational expression (operational expression for deriving a target steering amount based on the rotation angle of the electric motor). The other first control signal shows a target steering amount derived based on the rotation angle of the electric motor of the electric power steering detected by the resolver and a second operational expression (operational expression for deriving a target steering amount based on the rotation angle of the electric motor) different from the first operational expression.

Specifically, the target outputs obtained by the computation units 30 are of the same type, but are different from one another in at least one of information used for deriving the target outputs in the corresponding computation units 30 (e.g., information detected by the sensors 200) and contents of the deriving process (e.g., mathematical expression) of the target outputs in the computation units 30.

In the example of FIG. 3, the first computation unit 31 obtains a target steering amount based on a steering angle of the steering wheel of the vehicle 11 detected by the steering angle sensor 206. The second computation unit 32 obtains a target steering amount based on information detected by the resolver (not shown) and the first operational expression. The third computation unit 33 obtains a target steering amount based on information detected by the resolver and the second operational expression.

In the central controller 300, output terminals of the computation units 30 are respectively electrically connected to input terminals of the output unit 50 by internal wirings. For example, each of the computation units 30 is constituted by a computation core (processor) that performs predetermined computation.

### <<Determination Unit>>

The determination unit 40 assigns a target output shown by a first control signal supplied from each of the computation units 30 with a number of votes based on the degree of reliability of this first control signal, and performs a majority vote of target outputs.

In this example, the determination unit 40 previously stores numbers of votes based on the degrees of reliability of the first control signals supplied from the computation units 30. The determination unit 40 receives the first control signals supplied from the computation units 30, and assigns the target outputs shown by the first control signals with numbers of votes based on the degrees of reliability of the first control signals. As the degree of reliability of a first control signal, the number of votes based on the degree of reliability of this first control signal increases. To each of a plurality of first control signals, the number of votes based on the degree of reliability of this first control signal is assigned as a weight. As the degree of reliability of a first control signal increases, the number of votes based on the degree of reliability of this first control signal increases.

For example, the determination unit 40 stores number of votes information (information table) showing numbers of votes based on the degrees of reliability of a plurality of first control signals. The determination unit 40 selects a number of votes corresponding to each of the first control signals supplied from the computation units 30 from the number of votes information, and assigns the selected number of votes to a target output shown by each of the first control signals.

Then, the determination unit 40 determines which one of the target outputs is a majority, and outputs a majority vote signal showing which target output is a majority, to the output unit 50.

For example, the determination unit 40 is constituted by a computation core (processor) for performing predetermined computation, and a memory that stores programs and data for operating the computation core. Operation of the determination unit 40 will be specifically described later.

### <<Output Unit>>

The output unit 50 outputs a second control signal based on first control signals supplied from the computation units 30 and a result of a majority vote of target outputs by the determination unit 40.

The second control signals are signals for controlling the actuators 100. Specifically, the second control signals show target outputs (e.g., target controlled variables) of the actuators 100. In this example, the target outputs shown by the second control signals are of the same type as target outputs shown by the first controllers. For example, in a case where the target outputs shown by the first controllers are target steering amounts, the target outputs shown by the second control signals are also target steering amounts.

In this example, the output unit 50 selects a first control signal showing a target output determined to be a majority by the determination unit 40 from the first control signals supplied from the computation units 30, and outputs the selected first control signal as a second control signal.

In the central controller 300, an output terminal of the output unit 50 is electrically connected to one end of the signal line 600. Specifically, the central controller 300 includes a connector 30a corresponding to the output terminal of the output unit 50. The output terminal of the output unit 50 is electrically connected to the connector 30a by an internal wiring 30b. One end of the signal line 600 is connected to the connector 30a. For example, the output unit 50 is constituted by a computation core (processor) for performing predetermined computation. Operation of the output unit 50 will be specifically described later.

In this example, the three computation units 30 (the first computation unit 31, the second computation unit 32, and the third computation unit 33), the determination unit 40, and the output unit 50 in the central controller 300 constitute a safety architecture 70 of 1-out-of-3 channel (1oo3). The safety architecture 70 is fail operational (control continuation type).

### <Zone Controller (Second Controller)>

The zone controller 400 is disposed on a signal path between the central controller 300 and a corresponding one of the actuators 100. In this example, the zone controller 400 includes an input/output control unit 61, a diagnosis unit 62, and an output unit 63.

### <<Input/output Controller, Diagnosis Unit, and Output Unit>>

The input/output control unit 61 performs predetermined input/output processing (e.g., protocol conversion) on the second control signal output from the output unit 50. The input/output control unit 61 supplies the second control signal subjected to the input/output processing to the output unit 50. The diagnosis unit 62 performs an abnormality diagnosis of the input/output control unit 61. Based on a diagnosis result of the input/output control unit 61 by the diagnosis unit 62, the output unit 63 is switched between a first state of outputting the second control signal supplied from the input/output control unit 61 and a second state of outputting a predetermined output signal (fixed value). Specifically, the output unit 63 is switched to the first state in a case where the input/output control unit 61 has no abnormality, and switched to the second state in a case where the input/output control unit 61 has abnormality. For example, each of the input/output control unit 61, the diagnosis unit 62, and the output unit 63 is constituted by a computation core (processor) for performing predetermined computation.

In this example, in the zone controller 400, an input terminal of the input/output control unit 61 is electrically connected to the other end of the signal line 600. Specifically, the zone controller 400 includes a connector 40a corresponding to the input terminal of the input/output control unit 61. The input terminal of the input/output control unit 61 is electrically connected to the connector 40a by an internal wiring 40b.

In this example, the input/output control unit 61, the diagnosis unit 62, and the output unit 63 constitute a safety architecture 80 of 1-out-of-1 channel with diagnostics (1oo1D). The safety architecture 80 is fail safe (control stop type).

### [Specific Examples of Operation of Determination Unit and Output Unit]

Next, specific examples of operation of the determination unit 40 and the output unit 50 will be described. In an example described below, "five votes" are assigned to a first control signal supplied from the first computation unit 31, "four votes" are assigned to a first control signal supplied from the second computation unit 32, and "two votes" are assigned to a first control signal supplied from the third computation unit 33. In the example described below, target outputs shown by the first control signals are target steering amounts.

For example, in a case where the first control signals supplied from the first computation unit 31 and the second computation unit 32 show a target steering amount of "rotate counterclockwise by 10°" and the first control signal supplied from the third computation unit 33 shows a target steering amount of "rotate counterclockwise by 15°," "nine votes" as the sum of the "five votes of the first control signal from the first computation unit 31 and the "four votes" of the first control signal from the second computation unit 32 are assigned to the target steering amount of "rotate counterclockwise by 10°" and the "two votes" of the first control signal from the third computation unit 33 are assigned to the target steering amount of "rotate counterclockwise by 15°."

In this case, the determination unit 40 outputs a majority vote signal showing that the target steering amount of "rotate counterclockwise by 10°" is a majority. The output unit 50 selects the first control signal showing the target steering amount of "rotate counterclockwise by 10°" (i.e., one of the first control signals supplied from the first computation unit 31 and the second computation unit 32) from the first control signals supplied from the first computation unit 31, the second computation unit 32, and the third computation unit 33, and outputs the selected first control signal as a second control signal.

### [Advantages of Embodiment]

As described above, the second control signal can be output in consideration of the degrees of reliability of a plurality of first control signals. Accordingly, high reliability in controlling the actuators 100 can be maintained. Thus, reliability of the fail operational function can be enhanced.

### (First Variation of Embodiment)

The numbers of votes based on the degrees of reliability of a plurality of first control signals may vary depending on the scene of the vehicle 11. For example, the determination unit 40 may store information (information table) showing numbers of votes based on the degrees of reliability of first control signals for each scene of the vehicle 11. Examples of the scene of the vehicle 11 include a scene in which the vehicle 11 travels in the daytime, a scene in which the vehicle 11 travels at night, a scene in which the vehicle 11 travels at low speed, a scene in which the vehicle 11 travels at high speed, a scene in which the vehicle 11 follows another vehicle in front, a scene in which the vehicle is put in a garage, and a combination of these scenes. These scenes can be estimated from, for example, information detected by the sensors 200 and an external environment of the vehicle 11 recognized from the information detected by the sensors 200.

As described above, since the numbers of votes based on the degrees of reliability of a plurality of first control signals vary depending on the scene of the vehicle 11, the second control signal can be output in consideration of the degrees of reliability of the plurality of first control signals that vary depending on the scene of the vehicle 11. Accordingly, high reliability in controlling the actuators 100 can be maintained. Thus, reliability of the fail operational function can be enhanced.

### (Second Variation of Embodiment)

The output unit 50 may be configured to generate a second control signal by synthesizing first control signals supplied from the computation units 30 based on a result of a majority vote of target outputs by the determination unit 40 and the numbers of votes based on the degrees of reliability of the first control signals.

Specifically, in this second variation, the determination unit 40 receives the first control signals supplied from the computation units 30, and assigns target outputs shown by the first control signals with numbers of votes based on the degrees of reliability of the first control signals. Next, the determination unit 40 determines to which group a target output shown by each first control signal belongs among a plurality of predetermined groups (groups of target outputs). The determination unit 40 determines which group of target groups is a majority among the plurality of groups based on the sum of the numbers of votes assigned to target outputs belonging to the groups, and outputs, to the output unit 50, a majority vote signal showing which group of target outputs is a majority. To each of the first control signals, the number of votes based on the degree of reliability of this first control signal is assigned as a weight. As the degree of reliability of a first control signal increases, the number of votes based on the degree of reliability of this first control signal increases.

In the second variation, the output unit 50 selects one or more first control signals showing target outputs belonging to the group determined as a group to which target outputs as a majority belongs by the determination unit 40, from the plurality of first control signals supplied from the computation units 30. Then, the output unit 50 outputs, as a second control signal, a first control signal having the highest degree of reliability among the selected one or more first control signals.

For example, the output unit 50 stores reliability information (information table) showing the degrees of reliability of the first control signals. The output unit 50 selects a first control signal having highest degree of reliability among one or more first control signals with reference to the reliability information, and outputs the selected first control signal as a second control signal.

### [Specific Examples of Operation of Determination Unit and Output Unit]

Next, specific examples of operation of the determination unit 40 and the output unit 50 will be described. In an example described below, "five votes" are assigned to a first control signal supplied from the first computation unit 31, "four votes" are assigned to a first control signal supplied from the second computation unit 32, and "two votes" are assigned to a first control signal supplied from the third computation unit 33. In the example described below, target outputs shown by the first control signals are target steering amounts. In addition, in the example described below, a group of "target steering amount showing counterclockwise rotation" and a group of "target steering amount showing clockwise rotation" are previously defined.

For example, in a case where the first control signal supplied from the computation unit 31 shows a target steering amount of "rotate clockwise by 50°," the first control signal supplied from the second computation unit 32 shows a target steering amount of "rotate counterclockwise by 10°," and the first control signal supplied from the third computation unit 33 shows a target steering amount of "rotate counterclockwise by 15°," "five votes" of the first control signal from the first computation unit 31 are assigned to the target steering amount of "rotate clockwise by 50°," "four votes" of the first control signal from the second computation unit 32 are assigned to the target steering amount of "rotate counterclockwise by 10°," and "two votes" of the first control signal from the third computation unit 33 are assigned to the target steering amount of "rotate counterclockwise by 15°."

In this case, the sum of votes of target steering amounts belonging to the group of "target steering amount showing clockwise rotation" is "five votes" and the sum of votes of target steering amounts belonging to the group of "target steering amount showing counterclockwise rotation" is "six." The determination unit 40 outputs a majority vote signal showing that target steering amounts belonging to the group of "target steering amount showing counterclockwise rotation" is a majority. Then, the output unit 50 selects the first control signal showing the target steering amount belonging to the group of "target steering amount showing counterclockwise rotation" (i.e., first control signals supplied from the second computation unit 32 and the third computation unit 33) from the first control signals supplied from the first computation unit 31, the second computation unit 32, and the third computation unit 33. Thereafter, the output unit 50 selects the first control signal from the second computation unit 32 having the largest number of assigned votes (example of reliability) (i.e., first control signal showing the target steering amount of "rotate counterclockwise by 10°") from the first control signals supplied from the second computation unit 32 and the third computation unit 33, and outputs the selected first control signal as a second control signal.

As described above, since the second control signal is generated by synthesizing first control signals supplied from the computation units 30 based on a result of the majority vote of target outputs by the determination unit 40 and the numbers of votes based on the degrees of reliability of the first control signals, the second control signal can be generated in consideration of the degrees of reliability of the first control signals. Accordingly, high reliability in controlling the actuators 100 can be maintained. Thus, reliability of the fail operational function can be enhanced.

In the second variation, the output unit 50 may be configured as follows. First, the output unit 50 selects one or more first control signals showing target outputs belonging to the group determined as a group to which a majority of target outputs belongs by the determination unit 40, from the first control signals supplied from the computation units 30. Then, the output unit 50 performs weighted averaging on each of the selected one or more first control signals based on the degree of reliability of this first control signal. To each of the first control signals, a weighting factor (smaller than one and larger than zero) based on the degree of reliability of this first control signal may be assigned as a weight. For example, as the degree of reliability of a first control signal, the weighting factor based on the degree of reliability of this first control signal increases. In this example, the determination unit 50 stores weighting factor information (information table) showing weighting factors based on the degrees of reliability of a plurality of first control signals. Then, the output unit 50 selects a weighting factor corresponding to each of the one or more first control signals from the weighting factor information, and performs weighted averaging of one or more first control signals using the selected one or more weighting factors. Thereafter, the output unit 50 outputs a second control signal showing a target output derived by the weighted averaging.

### (Third Variation of Embodiment)

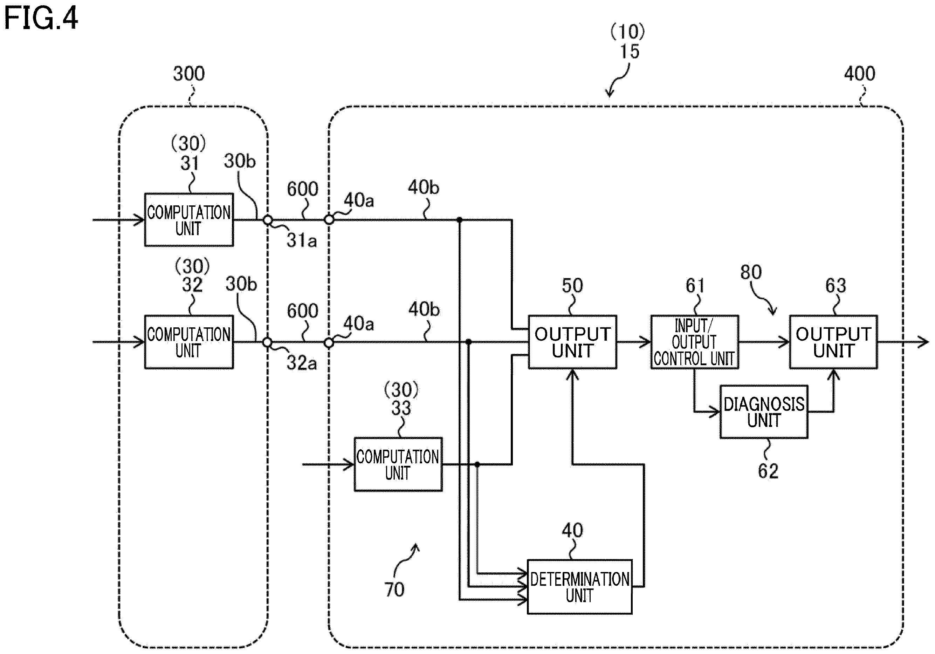

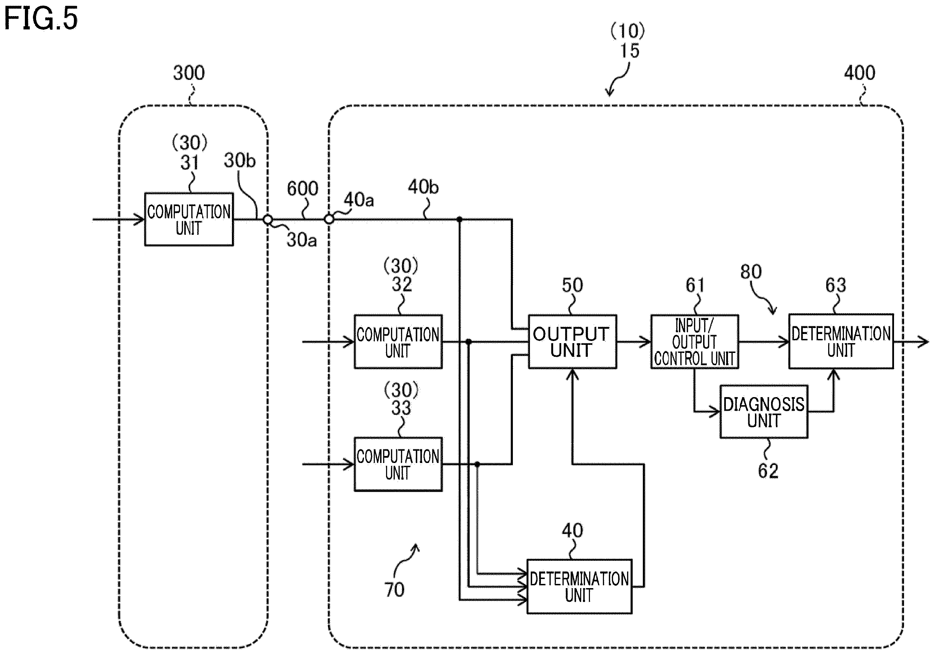

As illustrated in FIGS. 4 and 5, one or more of the computation units 30 may be provided in the central controller 300 (first controller). Another one or more of the computation units 30 may be provided in the zone controller 400 (second controller).

In the example of FIG. 4, the first computation unit 31 and the second computation unit 32 of the three computation units 30 are disposed in the central controller 300, and the third computation unit 33 is disposed in the zone controller 400. The determination unit 40 and the output unit 50 are disposed in the zone controller 400.

In the example of FIG. 4, two signal lines 600 are provided to connect the central controller 300 to the zone controller 400. In the central controller 300, output terminals of the two computation units 30 (specifically the first computation unit 31 and the second computation unit 32) are respectively electrically connected to two connectors 30a of two internal wirings 30b to be thereby electrically connected to ends of the two signal lines 600 at one side. In the zone controller 400, two of three input terminals of the output unit 50 are electrically connected to the two connectors 40a by the two internal wirings 40b to be thereby electrically connected to ends of the signal lines 600 at the other side. The other input terminal of the three input terminals of the output unit 50 is electrically connected to an output terminal of the third computation unit 33 by an internal wiring.

In the example of FIG. 5, the first computation unit 31 of the three computation units 30 is disposed in the central controller 300, and the second computation unit 32 and the third computation unit 33 are disposed in the zone controller 400. The determination unit 40 and the output unit 50 are disposed in the zone controller 400.

In the example of FIG. 5, in the central controller 300, the first computation unit 31 is electrically connected to the connector 30a by the internal wiring 30b to be thereby connected to one end of the signal line 600. In the zone controller 400, one of three input terminals of the output unit 50 is electrically connected to the connector 40a by the internal wiring 40b to be thereby electrically connected to the other end of the signal line 600. The other two input terminals of the output unit 50 are electrically connected to output terminals of two computation units 30 (specifically the second computation unit 32 and the third computation unit 33) by two internal wirings.

As described above, since one or more of the computation units 30 are disposed in the central controller 300 (first controller) and another one or more of the computation units 30 are disposed in the zone controller 400 (second controller), even when supply of first control signals from the computation units 30 of the central controller 300 stops because of an error in the central controller 300, control of the actuators 100 can be continued by using first control signals supplied from the computation units 30 in the zone controller 400. As a result, reliability of the fail operational function can be enhanced.

### (Fourth Variation of Embodiment)

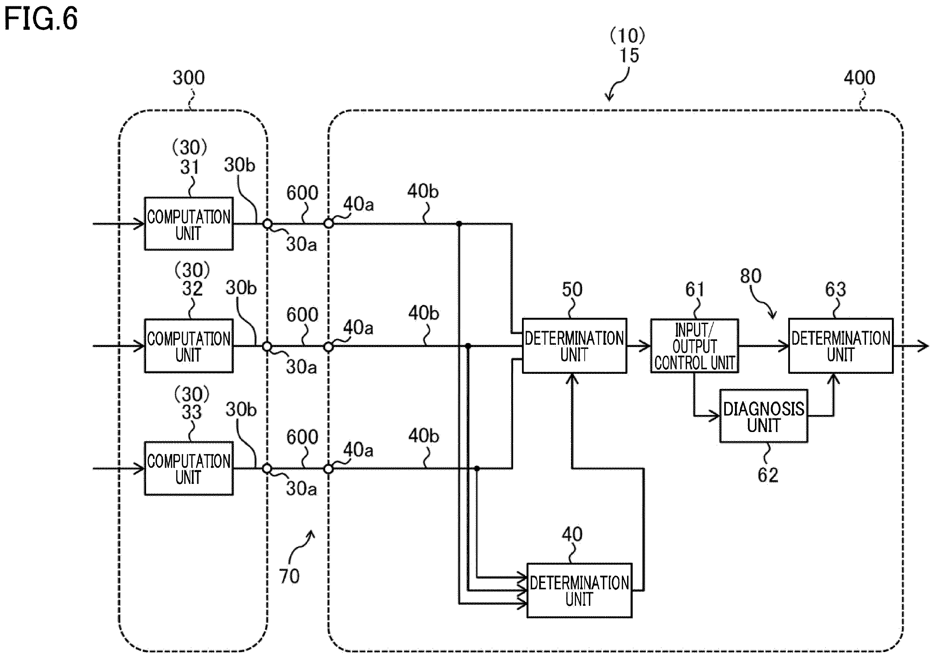

As illustrated in FIG. 6, in a fourth variation, the computation units 30 may be disposed in the central controller 300 (first controller). The determination unit 40 and the output unit 50 may be disposed in the zone controller 400 (second controller).

In the example of FIG. 6, in the central controller 300, output terminals of the computation units 30 are electrically connected to ends of the signal lines 600 at one side. Specifically, the central controller 300 includes three connectors 30a respectively corresponding to the three computation units 30. The output terminals of the three computation units 30 are respectively electrically connected to the three connectors 30a by three internal wirings 30b. Ends of the three signal lines 600 at one side are respectively connected to the three connectors 30a. In the zone controller 400, a plurality of input terminals of the output unit 50 are electrically connected to ends of the signal lines 600 at the other side. Specifically, the zone controller 400 includes three connectors 40a respectively corresponding to three input terminals of the output unit 50. The three input terminals of the output unit 50 are respectively electrically connected to the three connectors 40a by three internal wirings 40b. The ends of the three signal lines 600 at the other side are respectively connected to the three connectors 40a.

In the example of FIG. 6, the three computation units 30 (the first computation unit 31, the second computation unit 32, and the third computation unit 33) in the central controller 300 and the diagnosis unit 40 and the output unit 50 in the zone controller 400 constitute a safety architecture 70 of 1oo3 (1-out-of-3 channel).

The central controller 300 includes four or more computation units 30. In this case, the output unit 50 outputs a second control signal based on first control signals supplied from the four or more computation units 30 and a result of a majority vote of target outputs by the determination unit 40.

As described above, since the computation units 30 are disposed in the central controller 300 (first controller) and the determination unit 40 and the output unit 50 are disposed in the zone controller 400 (second controller), a plurality of first control signals can be supplied from the central controller 300 to the zone controller 400 through the signal lines 600. Accordingly, survivability to a communication error (e.g., blackout) between the central controller 300 and the zone controller 400 can be enhanced, as compared to a case where a single first control signal is supplied from the central controller 300 to the zone controller 400 through a single signal line. That is, a failure in continuing control of the actuators 100 caused by communication errors between the central controller 300 and the zone controller 400 is less likely to occur. As a result, continuity of the fail operational function can be enhanced.

### (First Variation of Signal Line)

At least two of the signal lines 600 connecting the central controller 300 (the first controller) to the zone controller 400 (the second controller) preferably have different types of resistance.

As described above, since at least two of the signal lines 600 have different types of resistance, survivability to a communication error between the central controller 300 and the zone controller 400 can be enhanced, as compared to a case where all the signal lines 600 have the same type of resistance. Accordingly, continuity of the fail operational function can be enhanced.

For example, the signal lines 600 include one or more signal lines 600 having resistance (mechanical resistance) to a mechanical external force such as vibrations and impacts. If the signal lines 600 do not include a signal line 600 having resistance (electrical resistance) to an electrical external force such as noise, the electrical external force might cause communication errors in all the signal lines. On the other hand, the signal lines 600 include signal lines 600 having electrical resistance as well as signal lines 600 having mechanical resistance, electrical errors are less likely to occur in all the signal lines 600 because of an electrical external force.

### (Second Variation of Signal Line)

At least two of the signal lines 600 connecting the central controller 300 (the first controller) to the zone controller 400 (the second controller) are preferably of different types. Examples of these types of the signal lines 600 include diameters of the signal lines 600, materials for the signal lines 600, and structures of the signal lines 600.

As described above, since at least two of the signal lines 600 are of different types, the two signal lines 600 are allowed to have different types of resistance. Accordingly, survivability to a communication error between the central controller 300 and the zone controller 400 can be enhanced, as compared to the case where all the signal lines 600 have the same type of resistance. Accordingly, continuity of the fail operational function can be enhanced.

For example, in a configuration in which the diameter of one of the signal lines 600 is made larger than the diameter of the other signal line 600, mechanical resistance of the former signal line 600 is higher than mechanical resistance of the latter signal line 600. In a configuration in which the strength of the material for one of the signal lines 600 is made higher than the strength of the material for the other signal line 600, mechanical strength of the former signal line 600 is higher than mechanical resistance of the latter signal line 600. In a configuration in which the structure of one of the signal lines 600 includes a multi-layer insulation coating and the structure of the other signal line 600 includes a single-layer insulation coating, electrical resistance of the former signal line 600 is higher than electrical resistance of the latter signal line 600.

### (Third Variation of Signal Line)

At least two of the signal lines 600 connecting the central controller 300 (the first controller) to the zone controller 400 (the second controller) are preferably separated from each other.

As described above, since at least two of the signal lines 600 are separated from each other, the risk of occurrence of communication errors (especially blackout caused by disconnection) in all the signal lines 600 by an external force (especially mechanical external force) can be reduced. As a result, continuity of the fail operational function can be enhanced.

For example, one signal line 600 may reach the zone controller 400 from the central controller 300 by way of the right side of the vehicle 11 with the other signal line 600 reaching the zone controller 400 from the central controller 300 by way of the left side of the vehicle 11.

### (Specific Structure of Controller)

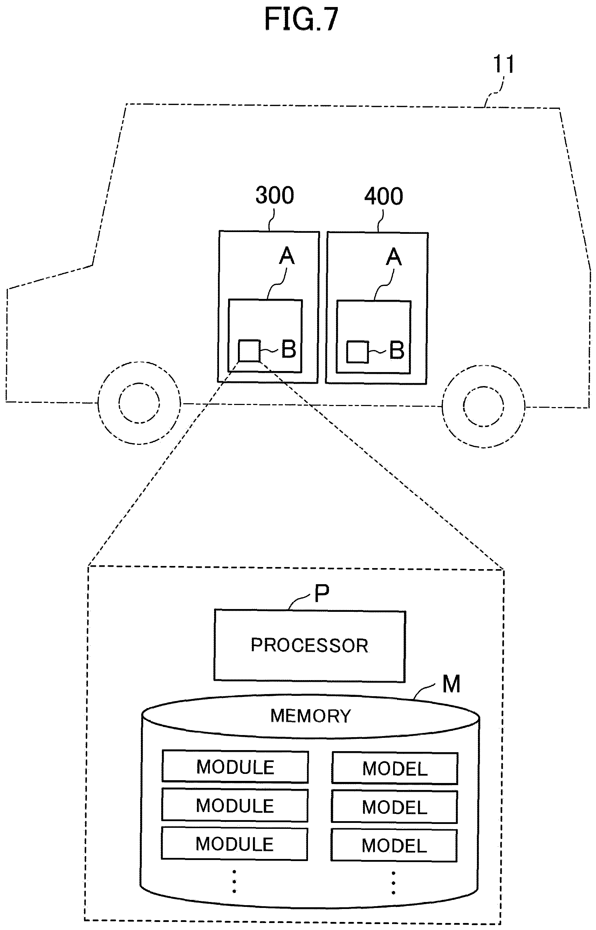

FIG. 7 illustrates an example specific configuration of the central controller 300 and the zone controller 400. The central controller 300 is constituted by an electronic control unit (ECU). The electronic control unit includes one or more chips A. Each chip A includes one or more cores B. The core B includes a processor P and a memory M. That is, the central controller 300 includes one or more processors P and one or more memories M. The memory M stores programs and information for operating the processor. Specifically, the memory M stores, for example, a module as software capable of being executed by the processor P and data showing a model to be used in processing of the processor P. Functions of units of the central controller 300 described above are implemented by execution of modules stored in the memory M by the processor P. The configuration of the zone controller 400 is similar to the configuration of the central controller 300.

### (Other Embodiments)

In the foregoing description, the output unit 50 may be configured to output N (where N is an integer less than M) second control signals based on M (where M is an integer of 3 or more) first control signals. For example, M computation units 30, the determination unit 40, and the output unit 50 may constitute a safety architecture 70 of M-out-of-N channel (MooN).

The embodiments described above may be suitably combined. The foregoing embodiments are merely preferred examples in nature, and are not intended to limit the invention disclosed here, applications, and use of the application.

### INDUSTRIAL APPLICABILITY

As described above, the invention disclosed here is useful as a vehicle control system.

### DESCRIPTION OF REFERENCE CHARACTERS

- 10: vehicle control system
- 11: vehicle
- 15: computation device
- 100: actuator
- 200: sensor
- 300: central controller (first controller)
- 400: zone controller (second controller)
- 30: computation unit
- 31: first computation unit
- 32: second computation unit
- 33: third computation unit
- 40: determination unit
- 50: output unit
- 61: input/output control unit
- 62: diagnosis unit
- 63: output unit
- 70: safety architecture
- 80: safety architecture

## Claims

1. A vehicle control system configured to control an actuator (100) in a vehicle (11), the vehicle control system comprising:
three or more computation units (30);
a determination unit (40); and
an output unit (50), wherein
each of the three or more computation units (30) supplies a first control signal showing a target output of the actuator (100) to the output unit (50),
the vehicle control system being **characterised in that**
the determination unit (40) assigns the target output shown by the first control signal supplied from each of the three or more computation units (30) with a number of votes based on a degree of reliability of the first control signal, and performs a majority vote of the target output based on the number of votes assigned to the target output,
the number of votes assigned to the target output shown by the first control signal supplied from each of the three or more computation units (30) increases as the degree of reliability of the first control signal increases, and
the output unit (50) outputs a second control signal for controlling the actuator (100) based on a target output regarded as a majority in the majority vote of the target output by the determination unit (40) among the target outputs shown by the first control signals supplied from the three or more computation units (30).

2. The vehicle control system according to claim 1, wherein
the number of votes based on the degree of reliability of each of the plurality of first control signals varies depending on a scene of the vehicle (11).

3. The vehicle control system according to claim 1 or 2, wherein
the output unit (50) generates the second control signal by synthesizing the first control signals supplied from the three or more computation units (30) based on a result of the majority vote of the target output by the determination unit (40) and the number of votes based on the degrees of reliability of the plurality of first control signals.

4. The vehicle control system according to any one of claims 1 to 3, further comprising:
a first controller (300); and
a second controller (400) disposed on a signal path between the first controller (300) and the actuator (100), wherein
one or more of the three or more computation units (30) are disposed in the first controller (300), and another one or more of the three or more computation units (30) are disposed in the second controller (400).

5. The vehicle control system according to any one of claims 1 to 3, further comprising:
a first controller (300); and
a second controller (400) disposed on a signal path between the first controller (300) and the actuator (100), wherein
the three or more computation units (30) are disposed in the first controller (300), and
the determination unit (40) and the output unit (50) are disposed in the second controller (400).

## Patentansprüche

1. Fahrzeugsteuersystem, das konfiguriert ist, um einen Aktuator (100) in einem Fahrzeug (11) zu steuern, wobei das Fahrzeugsteuersystem Folgendes umfasst:
drei oder mehr Recheneinheiten (30);
eine Bestimmungseinheit (40); und
eine Ausgabeeinheit (50), wobei
jede der drei oder mehr Recheneinheiten (30) ein erstes Steuersignal, das eine Zielausgabe des Aktuators (100) zeigt, der Ausgabeeinheit (50) zuführt, wobei das Fahrzeugsteuersystem **dadurch gekennzeichnet ist, dass**
die Bestimmungseinheit (40) die Zielausgabe, die durch das erste Steuersignal gezeigt wird, das von jeder der drei oder mehr Recheneinheiten (30) zugeführt wird, einer Anzahl von Stimmen basierend auf einem Zuverlässigkeitsgrad des ersten Steuersignals zuweist und eine Mehrheitsabstimmung der Zielausgabe basierend auf der Anzahl von der Zielausgabe zugewiesenen Stimmen durchführt,
die Anzahl von Stimmen, die der Zielausgabe zugewiesen werden, die von dem ersten Steuersignal gezeigt wird, das von jeder der drei oder mehr Recheneinheiten (30) zugeführt wird, mit zunehmendem Zuverlässigkeitsgrad des ersten Steuersignals zunimmt, und
die Ausgabeeinheit (50) ein zweites Steuersignal zum Steuern des Aktuators (100) basierend auf einer Zielausgabe ausgibt, die als Mehrheit in der Mehrheitsabstimmung der Zielausgabe durch die Bestimmungseinheit (40) unter den Zielausgaben, die durch die ersten Steuersignale gezeigt werden, die von den drei oder mehr Recheneinheiten (30) zugeführt werden, betrachtet wird.

2. Fahrzeugsteuersystem nach Anspruch 1, wobei
die Anzahl von Stimmen basierend auf dem Zuverlässigkeitsgrad jedes der Vielzahl von ersten Steuersignalen je nach einer Szene des Fahrzeugs (11) variiert.

3. Fahrzeugsteuersystem nach Anspruch 1 oder 2, wobei
die Ausgabeeinheit (50) das zweite Steuersignal durch Synthetisieren der ersten Steuersignale, die von den drei oder mehr Recheneinheiten (30) zugeführt werden, basierend auf einem Ergebnis der Mehrheitsabstimmung der Zielausgabe durch die Bestimmungseinheit (40) und der Anzahl von Stimmen basierend auf dem Zuverlässigkeitsgrad der Vielzahl von ersten Steuersignalen erzeugt.

4. Fahrzeugsteuersystem nach einem der Ansprüche 1 bis 3, ferner umfassend:
eine erste Steuerung (300); und
eine zweite Steuerung (400), die auf einem Signalpfad zwischen der ersten Steuerung (300) und dem Aktuator (100) angeordnet ist, wobei
eine oder mehrere der drei oder mehr Recheneinheiten (30) in der ersten Steuerung (300) angeordnet sind und eine andere oder mehrere der drei oder mehr Recheneinheiten (30) in der zweiten Steuerung (400) angeordnet sind.

5. Fahrzeugsteuersystem nach einem der Ansprüche 1 bis 3, ferner umfassend:
eine erste Steuerung (300); und
eine zweite Steuerung (400), die auf einem Signalpfad zwischen der ersten Steuerung (300) und dem Aktuator (100) angeordnet ist, wobei
die drei oder mehr Recheneinheiten (300) in der ersten Steuerung (300) angeordnet sind, und
die Bestimmungseinheit (40) und die Ausgabeeinheit (50) in der zweiten Steuerung (400) angeordnet sind.

## Revendications

1. Système de commande de véhicule configuré pour commander un actionneur (100) dans un véhicule (11), le système de commande de véhicule comprenant :
trois ou plus de trois unités de calcul (30) ;
une unité de détermination (40) ; et
une unité de sortie (50), dans lequel
chacune des trois ou plus de trois unités de calcul (30) fournit un premier signal de commande présentant une sortie cible de l'actionneur (100) à l'unité de sortie (50),
le système de commande de véhicule étant **caractérisé en ce que** l'unité de détermination (40) attribue à la sortie cible présentée par le premier signal de commande fourni à partir de chacune des trois ou plus de trois unités de calcul (30) un nombre de votes basé sur un degré de fiabilité du premier signal de commande, et réalise un vote majoritaire de la sortie cible basé sur le nombre de votes attribué à la sortie cible,
le nombre de votes attribué à la sortie cible présentée par le premier signal de commande fourni à partir de chacune des trois ou plus de trois unités de calcul (30) augmente à mesure que le degré de fiabilité du premier signal de commande augmente, et
l'unité de sortie (50) délivre en sortie un second signal de commande afin de commander l'actionneur (100) sur la base d'une sortie cible considérée comme une majorité dans le vote majoritaire de la sortie cible par l'unité de détermination (40) parmi les sorties cibles présentées par les premiers signaux de commande fournis à partir des trois ou plus de trois unités de calcul (30).

2. Système de commande de véhicule selon la revendication 1, dans lequel
le nombre de votes basé sur le degré de fiabilité de chacun de la pluralité de premiers signaux de commande varie en fonction d'une scène du véhicule (11).

3. Système de commande de véhicule selon la revendication 1 ou 2, dans lequel
l'unité de sortie (50) génère le second signal de commande en synthétisant les premiers signaux de commande fournis à partir des trois ou plus de trois unités de calcul (30) sur la base d'un résultat du vote majoritaire de la sortie cible par l'unité de détermination (40) et du nombre de votes basé sur les degrés de fiabilité de la pluralité de premiers signaux de commande.

4. Système de commande de véhicule selon l'une quelconque des revendications 1 à 3, comprenant en outre :
un premier dispositif de commande (300) ; et
un second dispositif de commande (400) disposé sur un trajet de signal entre le premier dispositif de commande (300) et l'actionneur (100), dans lequel
une ou plusieurs des trois ou plus de trois unités de calcul (30) est/sont disposée(s) dans le premier dispositif de commande (300), et une autre ou plusieurs autres des trois ou plus de trois unités de calcul (30) est/sont disposée(s) dans le second dispositif de commande (400).

5. Système de commande de véhicule selon l'une quelconque des revendications 1 à 3, comprenant en outre :
un premier dispositif de commande (300) ; et
un second dispositif de commande (400) disposé sur un trajet de signal entre le premier dispositif de commande (300) et l'actionneur (100), dans lequel
les trois ou plus de trois unités de calcul (30) sont disposées dans le premier dispositif de commande (300), et
l'unité de détermination (40) et l'unité de sortie (50) sont disposées dans le second dispositif de commande (400).
